Europäisches Patentamt

European Patent Office

Office européen des brevets

(11) Publication number: **0 174 682**
**B1**

# EUROPEAN PATENT SPECIFICATION

(45) Date of publication of patent specification: **23.11.89**

(51) Int. Cl.⁴: **B 65 G 39/02, B 65 G 23/08**

(21) Application number: **85201340.8**

(22) Date of filing: **21.08.85**

(54) **A method of securing a cover to the end of a thin-walled tube.**

(30) Priority: **04.09.84 NL 8402697**

(43) Date of publication of application:
**19.03.86 Bulletin 86/12**

(45) Publication of the grant of the patent:
**23.11.89 Bulletin 89/47**

(84) Designated Contracting States:
**AT DE FR GB NL**

(56) References cited:
**DE-A-2 611 610**
**FR-A-2 438 193**
**US-A-4 225 263**

(73) Proprietor: **Machinefabriek en Technische
Handelsonderneming M.H. van der Graaf B.V.
De Weyert 14
NL-8325 EM Vollenhove (NL)**

(72) Inventor: **van der Graaf, Meine Hendricus
Clarenberglaan 1
NL-8325 CE Vollenhove (NL)**

(74) Representative: **Smulders, Theodorus A.H.J., Ir.
et al
Vereenigde Octrooibureaux Nieuwe Parklaan
107
NL-2587 BP 's-Gravenhage (NL)**

Courier Press, Leamington Spa, England.

## Description

This invention relates to a method of securing a cover to the end of a tube using a flange, the cover and the flange being provided with aligned holes, said flange being slidably disposed in the tube and is restrained from being pulled out of the tube by a restraining means accomodated in a shallow groove in the inner wall of the tube, the cover being connected to the flange by means of bolts passing through said holes, said restraining means being radially maintained in position.

In a similar method disclosed in FR—A—2,438,193, which corresponds to the preamble of claims 1 and 2, the restraining means used are balls or a helical spring. These means are introduced into the groove through an opening in the wall of the tube. Furthermore, in the prior method a groove must be formed in both the tube inner wall and the flange outer wall, which grooves can together accommodate the balls or the spring. In the prior method the balls or the spring cannot be placed in position until after the flange has been correctly positioned in the tube. Furthermore the prior method is not applicable to a thin-walled tube.

It is an object of the present invention to provide a solution for these problems.

With respect to the prior art reflected by the document mentioned above, the method according to the present invention — in a first aspect — is characterized in that the restraining means is a hard ring of steel, copper, plastics and so on, said ring being partly open so that it is resilient in a radial direction, the cross-section of said ring being dimensioned to fill the groove, the cover being provided with a circumferential recess defining a radial surface, said ring being maintained radially in position only by said radial surface.

Alternatively, according to a second aspect the present invention the restraining means is a hard ring of steel, copper, plastics and so on, said ring being partly open so that it is resilient in a radial direction, the cross-section of said ring being dimensioned to fill the groove, being maintained radially in position only by said bolts which are disposed closely to the circumferential edge of the cover.

Proper retention of the resilient ring is promoted in both cases by making the ring and the shallow groove in the inner wall of the tube with a rectangular cross-sectional configuration.

For sealing the joint, the tube end may be bevelled on the inside of the tube, and an O-ring arranged in the space thus formed.

Experiments have shown that the connection of the cover to the tube is so strong that a sufficient torque can also be transmitted when the cover or the flange are driven, so that the (sealed) joint excellently meets the demands imposed upon it.

For the sake of completeness it is observed that US—A—4,225,263 discloses a method of locking an element and a tube against axial displacement relative to one another, the element being slidably disposed in the tube and being restrained from being pulled out of the tube by means of a resilient ring accommodated in a shallow groove in the inner wall of the tube, said ring being radially maintained in position by the supporting edge of a cover, said cover being connected to the element by means of a bolt.

In this known method use is made of a flexible elastic ring which is unable to take any axial loads but upon being loaded is compressed or gives way. A further disadvantage is that the ring does not fit snugly in the groove and can thus be deflected.

Some embodiments of the invention will now be described with reference to the accompanying drawings. In said drawings,

Figure 1 shows a cross-sectional view of a bearing plate or cover secured to a thin-walled tube according to the present invention;

Figure 2 shows a side-elevational view of the arrangement of Figure 1, but with the cover removed; and

Figure 3 is a view similar to Figure 1, showing a part of a different embodiment of the arrangement.

Referring to the drawings, there is shown a drum or tube 1, to which a cover 2 is secured by means of a flange 3. For this purpose, flange 3 is disposed so as to be freely movable within the tube, whereafter a sharp-edged resilient ring 5 of substantially rectangular cross-sectional configuration is placed in a groove or recess 4 provided for the purpose in the inner wall of the tube. Thereafter the cover 2 is placed in position. Cover 2 is provided with a supporting edge 6. The diameters of the supporting edge and the spring ring have been selected so that, in the assembled condition, a closely fitting whole, for example a sliding fit, is obtained.

The cover 2 is subsequently secured by means of bolts 8 whereby a clearance or gap 7 is left: in the absence of such a gap the clamping force will often be insufficient.

To provide an hermetic seal, the tube end wall is provided on the inside with a bevel accommodating an O-ring 9.

The tube is supported through cover 2 on a shaft 10 and this through the intermediary of a bearing 11.

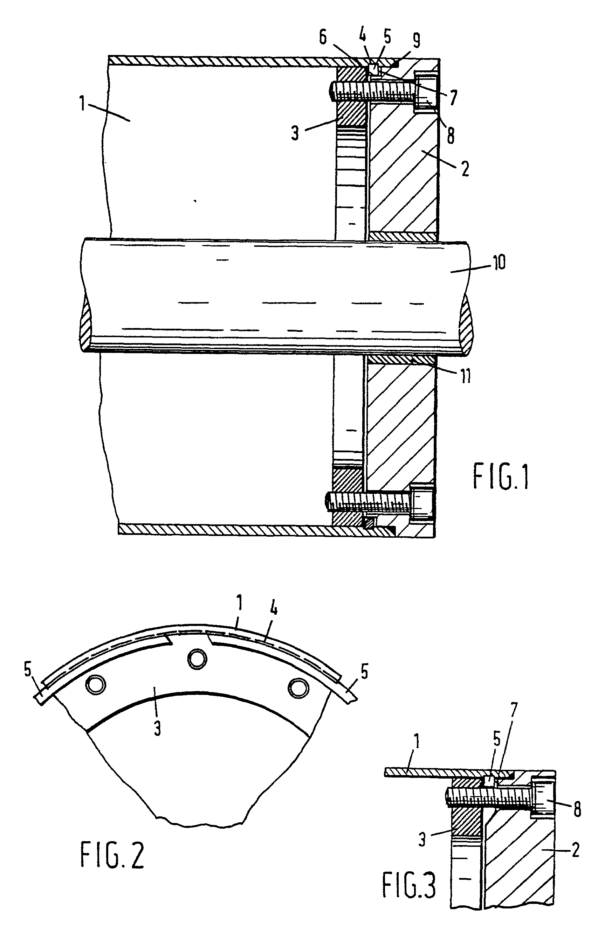

The construction shown in Figure 3 differs from that illustrated in Figure 1 to the extent that the resilient ring 5 is radially confined not by means of a supporting edge of the cover, but by bolts 8 being disposed so closely to the circumference of the cover that, in the assembled condition, they directly support ring 5.

## Claims

1. A method of securing a cover (2) to the end of a tube (1) using a flange (3), the cover and the flange being provided with aligned holes, said flange being slidably disposed in the tube and is restrained from being pulled out of the tube by a restraining means (5) accomodated in a shallow groove (4) in the inner wall of the tube, the cover being connected to the flange by means of bolts (8) passing through said holes, said restraining means (5) being radially maintained in position, characterized in that the restraining means is a hard ring (5) of steel, copper, plastics and so on, said ring being partly open so that it is resilient in a radial direction, the cross-section of said ring being dimensioned to fill the groove, the cover being provided with a circumferential recess defining a radial surface, said ring being maintained radially in position only by said radial surface (6).

2. A method of securing a cover (2) to the end of a tube (1) using a flange (3), the cover and the flange being provided with aligned holes, said flange being slidably disposed in the tube and is restrained from being pulled out of the tube by a restraining means (5) accomodated in a shallow groove (4) in the inner wall of the tube, the cover being connected to the flange by means of bolts (8) passing through said holes, said restraining means (5) being radially maintained in position, characterized in that the restraining means is a hard ring (5) of steel, copper, plastics and so on, said ring being partly open so that it is resilient in a radial direction, the cross-section of said ring being dimensioned to fill the groove, being maintained radially in position only by said bolts (8) which are disposed closely to the circumferential edge of the cover.

3. A method according to claim 1 or 2, characterized in that the resilient ring (5) and the shallow groove (4) in the inner wall of the tube (1) have a rectangular cross-sectional configuration.

4. A method according to claim 1, 2 or 3, characterized in that a clearance (or gap) (7) is formed between the resilient ring (5) and the end of the supporting edge of the cover (2).

5. A method according to claim 1, 2, 3 or 4, characterized in that the tube end wall is bevelled on the inside to receive an 0-ring (9).

**Patentansprüche**

1. Verfahren zum Befestigen eines Deckels (2) am Ende eines Rohres (1) unter Verwendung eines Flansches (3), wobei der Deckel und der Flansch mit zueinander ausgerichteten Löchern versehen sind, wobei der Flansch gleitfähig im Rohr angeordnet und mit Hilfe einer Rückhalteeinrichtung (5), die in einer flachen Rille (4) in der Innenwand des Rohres angeordnet ist, daran gehindert wird, aus dem Rohr herausgezogen zu werden, wobei der Deckel mit Hilfe von Schrauben (8), die durch die Löcher gehen, mit dem Flansch verbunden ist, wobei die Rückhalteeinrichtung (5) radial in ihrer Lage gehalten wird, dadurch gekennzeichnet, daß die Rückhalteeinrichtung einen harten Ring (5) aus Stahl, Kupfer, Kunststoff und dergl. darstellt, wobei der Ring teilweise offen ist, so daß er in einer radialen Richtung elastisch nachgiebig ist, wobei der Querschnitt des Rings so bemessen ist, daß er die Rille ausfüllt, wobei der Deckel mit einer Vertiefung am Umfang versehen ist, der eine radiale Fläche bildet, und wobei der Ring nur durch diese radiale Fläche (6) radial in seiner Lage gehalten wird.

2. Verfahren zum Befestigen eines Deckels (2) am Ende eines Rohres (1) unter Verwendung eines Flansches (3), wobei der Deckel und der Flansch mit zueinander ausgerichteten Löchern versehen sind, wobei der Flansch gleitfähig im Rohr angeordnet und mit Hilfe einer Rückhalteeinrichtung (5), die in einer flachen Rille (4) in der Innenwand des Rohres angeordnet ist, daran gehindert wird, aus dem Rohr herausgezogen zu werden, wobei der Deckel mit Hilfe von Schrauben (8), die durch die Löcher gehen, mit dem Flansch verbunden ist, wobei die Rückhalteeinrichtung (5) radial in ihrer Lage gehalten wird, dadurch daß die Rückhalteeinrichtung einen harten Ring (5) aus Stahl, Kupfer, Kunststoff und dergl. darstellt, wobei der Ring teilweise offen ist, so daß er in einer radialen Richtung elastisch nachgiebig ist, wobei der Querschnitt des Rings so bemessen ist, daß er die Rille ausfüllt, wobei (der Ring) nur durch diese Schrauben (8), die in der Nähe des Umfangsrandes des Deckels angeordnet sind, in seiner Stellung gehalten wird.

3. Verfahren nach Anspruch 1 oder 2, dadurch gekennzeichnet, daß der elastisch nachgiebige Ring (5) und die flache Rille (4) in der Innenwand des Rohres (1) einen rechteckigen Querschnitt haben.

4. Verfahren nach Anspruch 1, 2 oder 3, dadurch gekennzeichnet, daß ein freier Raum (oder Spalt) (7) zwischen dem elastisch nachgiebigen Ring (5) und dem Ende der Auflagekante des Deckels (2) ausgebildet ist.

5. Verfahren nach Anspruch 1, 2, 3 oder 4, dadurch gekennzeichnet, daß die Stirnwand des Rohres auf der Innenseite zur Aufnahme eines O-Ringes (9) abgeschrägt ist.

**Revendications**

1. Procédé de fixation d'un couvercle (2) à l'extrémité d'un tube (1) au moyen d'une bride (3), le couvercle et la bride comportant des trous alignés, ladite bride étant disposée de façon à pouvoir coulisser dans le tube et étant empêchée d'être tirée à l'extérieur du tube par des moyens de retenue (5) logés dans une rainure peu profonde (4) pratiquée dans la paroi intérieure du tube, le couvercle étant relié à la bride au moyen de boulons (8) passant par lesdits trous, lesdits moyens de retenue (5) étant maintenus radialement en position, caractérisé en ce que les moyens de retenue consistent en un anneau dur (5) d'acier, de cuivre, de matière plastique, etc., ledit anneau étant partiellement ouvert, de sorte qu'il est élastique en direction radiale, la section droite dudit anneau étant dimensionnée pour combler la rainure, le couvercle comportant un creux circonférentiel définissant une surface radiale, ledit anneau étant maintenu radialement en position uniquement par ladite surface radiale (6).

2. Procédé de fixation d'un couvercle (2) à l'extrémité d'un tube (1) au moyen d'une bride (3), le couvercle et la bride comportant des trous alignés, ladite bride étant disposée de façon à pouvoir coulisser dans le tube et étant empêchée d'être tirée à l'extérieur du tube par des moyens de retenue (5) logés dans une rainure peu profonde (4) pratique dans la paroi intérieure du tube, le couvercle étant relié à la bride au moyen de boulons (8) passant par lesdits trous, lesdits moyens de retenue (5) étant maintenus radialement en position, caractérisé en ce que les moyens de retenue consistent en un anneau dur (5) d'acier, de cuivre, de matière plastique, etc., ledit anneau étant partiellement ouvert, de sorte qu'il est élastique en direction radiale, la section droite dudit anneau étant dimensionnée pour combler la rainure, celui-ci étant maintenu radialement en position uniquement par des boulons (8) qui sont disposés tout près du bord circonférentiel du couvercle.

3. Procédé selon la revendication 1 ou 2, caractérisé en ce que l'anneau élastique (5) et la rainure peu profonde (4) pratiquée dans la paroi intérieure du tube (1) ont une configuration de section droite rectangulaire.

4. Procédé selon la revendication 1, 2 ou 3, caractérisé en ce qu'un intervalle (ou interstice) (7) est formé entre l'anneau élastique (5) et l'extrémité du bord de support du couvercle (2).

5. Procédé selon la revendication 1, 2, 3 ou 4, caractérisé en ce que la paroi terminale du tube est biseautée intérieurement pour recevoir un joint torique (9).

FIG.1

FIG.2

FIG.3